Europäisches Patentamt

European Patent Office

Office européen des brevets

(19)

(11) **EP 1 429 114 A2**

(12) **DEMANDE DE BREVET EUROPEEN**

(43) Date de publication:
**16.06.2004 Bulletin 2004/25**

(51) Int Cl.⁷: **G01B 11/30**

(21) Numéro de dépôt: **03447229.0**

(22) Date de dépôt: **18.09.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **29.11.2002 BE 200200688**

(71) Demandeur: **CENTRE DE RECHERCHES METALLURGIQUES a.s.b.l., CENTRUM VOOR RESEARCH IN DE METALLURGIE v.z.w. B-1040 Bruxelles (BE)**

(72) Inventeurs:
• **Moreas, Geneviève**
  **4520 Wanze (Moha) (BE)**
• **Schyns, Marc**
  **4690 Roclenge-Sur-Geer (BE)**

(74) Mandataire: **Van Malderen, Michel et al**
**Office van Malderen**
**85/043 Boulevard de la Sauvenière**
**4000 Liège (BE)**

(54) **Procédé et dispositif pour la determination en ligne de la topographie micrometrique de produits en mouvement**

(57)    La présente invention se rapporte à un procédé pour l'établissement du relevé topographique micrométrique global et la détermination en ligne de paramètres de rugosité 2D et 3D d'une surface (S) en défilement, de préférence une surface d'acier, dans lequel on procède à l'acquisition d'une image d'une partie de la surface de dimensions données et on traite numériquement cette image de manière à isoler une projection de ligne micrométrique, la lisser puis en déterminer les lignes de bord et la ligne milieu, un relevé topographique local de la surface étant réalisé par une ligne comprise entre et y compris ces lignes de bord, de préférence par la ligne milieu.

Fig. 4.a

EP 1 429 114 A2

## Description

### Objet de l'invention

La présente invention se rapporte à un développement du procédé décrit dans la demande de brevet non publiée N° BE2002/0192 (Procédé et dispositif pour la détermination en ligne de rugosité de bandes d'acier en mouvement), étendu à tout produit métallique présentant une surface plane, en ce compris les produits laminés à froid ou au chaud et également les cylindres de laminage, que ce soit lors de leur impression ou de leur utilisation en ligne.

La présente invention permet de reconstituer la topographie de la surface observée et plus particulièrement de calculer l'ensemble des paramètres de rugosité 2D et 3D.

L'invention se rapporte également au dispositif pour la mise en oeuvre du procédé.

### Arrière-plan technologique et état de la technique

On sait que la rugosité d'une bande d'acier influence fortement d'une part, son aptitude à la déformation, notamment par emboutissage et, d'autre part, diverses propriétés de surface de la bande, en particulier l'adhérence des peintures et l'aspect de la bande après peinture.

La reproductibilité souhaitée de ces propriétés requiert que la bande présente une rugosité aussi constante que possible sur toute sa surface. Il est d'ailleurs préférable que des bandes destinées à une même application, par exemple des éléments de carrosserie, présentent toutes une rugosité comparable.

Il est dès lors important de surveiller l'évolution de la rugosité de la bande pendant son laminage, afin de déceler aussi tôt que possible toute variation excessive de cette rugosité par rapport aux valeurs autorisées.

Par ailleurs, dans les applications où une certaine formabilité est nécessaire, les tôles d' acier obtenues par laminage à froid seront amenées avantageusement à être remplacées dans le futur par des tôles minces obtenues par laminage à chaud. Cette tendance est dictée par des raisons économiques.

Parmi les paramètres affectant la formabilité, la rugosité de la tôle est très importante, celle-ci étant directement liée à la quantité de lubrifiant qui peut s'accumuler à la surface du produit lors de la lubrification dans les zones critiques de la partie formée.

La valeur de rugosité Ra, dite "rugosité arithmétique", est exprimée en termes de moyenne arithmétique d'un profil filtré de rugosité déterminé à partir des écarts d'une courbe de mesure par rapport à une ligne moyenne. Elle peut notamment être calculée selon la norme DIN 3768, sans que cette définition soit limitative dans le cadre de la présente invention. D'autres paramètres de rugosité, tels que la valeur crête, le nombre de pics, la forme et la répétabilité des cratères, dans le cas de la rugosité déterministe, pourraient également être utilisés.

L'état de la technique comprend deux types de profileurs pour la détermination de rugosité : les profileurs tactiles et optiques.

Les méthodes tactiles utilisent des pointes de lecture mises en contact avec la surface.

On peut notamment citer un certain nombre de méthodes optiques existantes.

Les méthodes interférométriques (interférométrie par mesure de phase, par balayage vertical et projection de franges d'interférence) utilisent les interférences résultant de la superposition des ondes lumineuses incidentes sur une surface et des ondes lumineuses réfléchies par cette même surface. Leur précision peut être très grande, de l'ordre du nanomètre et elles fournissent un profil 3D de la surface observée, profil qui peut être utilisé pour calculer les différents paramètres de rugosité 2D et 3D. Toutefois ces méthodes requièrent une surface parfaitement statique, c'est-à-dire sans vibration et sans mouvement, pendant toute la durée de la mesure, soit typiquement pendant une à plusieurs secondes. Ceci est donc rédhibitoire pour une application en ligne sur un produit défilant.

Dans la méthode confocale, le profil de la surface est mesuré par une série de positionnements successifs d'un point de la surface étudiée à son niveau de focalisation le plus élevé. Ceci requiert ainsi un balayage vertical pour chaque point d'observation de la surface. La précision atteinte peut être très élevée mais l'étape de balayage vertical requiert un temps de mesure incompatible avec un produit défilant, soit plusieurs secondes.

Toutes ces techniques présentent donc l'inconvénient de nécessiter un certain temps pour la prise de mesure, ce qui est incompatible avec une prise de décision en ligne sur des installations fonctionnant à grande vitesse.

Un autre procédé utilisé est celui de la mesure de la direction de réflexion d'un rayon incident à la surface. Partant d'un rayon incident, formant un certain angle avec la normale à cette surface, la direction de réflexion est mesurée au travers d'un ensemble optique permettant d'augmenter la sensibilité de la mesure. L'expérience industrielle de ce type de mesure ainsi que les calculs obtenus montrent que la précision est limitée par les types de pentes rencontrées sur les surfaces observées. De plus, l'intervalle de mesure en Ra, typiquement de 0,3 μm à 3 μm, n'est pas couvert efficacement.

On utilise également la méthode de mesure du lobe de réflexion (diffusion) d'un rayon incident à la surface. Selon la théorie de Beckmann et al. (P. Beckman, A. Spizzichino, *The scattering* of *electromagnetic waves from rough surfaces,* Pergamon Press, 1963), lorsqu'un rayon incident d'angle connu est envoyé sur une surface, une relation existe entre la rugosité arithmétique de cette surface et la puissance réfléchie par cette même surface (voir demandes de brevets LU-A-87 483, LU-A-87 630, EP-A-484 310 et BE-A-905 862). Cette méthode est efficace en terme de mesure de la rugosité arithmétique en ligne mais ne fournit aucune autre information quant à la topographie de la surface, c'est-à-dire par exemple la distribution des plateaux (ou "sommets") et des creux (ou "vallées") dans le cas de la rugosité dite aléatoire, et la forme et la distribution des cratères dans le cas de la rugosité déterministe.

La demande belge N° BE2002/0192 se rapporte à un procédé et un dispositif pour l'évaluation en ligne de la rugosité arithmétique d'une surface en défilement, de préférence une bande d'acier revêtue ou non, où :

-    on procède à une acquisition d'image d'une partie de ladite surface de dimensions données, suivie d'un traitement numérique de cette image en vue de faire apparaître des "objets" ;
-    on calcule ensuite le produit du nombre d'objets ayant une surface minimale par leur surface moyenne, ledit produit étant essentiellement proportionnel à la rugosité arithmétique de la surface, le coefficient de proportionnalité dépendant de l'installation industrielle particulière utilisée.

Le procédé et le dispositif décrits dans cette demande de brevet ne fournissent pas un relevé détaillé de la topographie de surface du produit observé, ce qui constitue le problème technique que se propose de résoudre la présente invention, mais ils peuvent être avantageusement utilisés et adaptés pour ce faire.

Pour fixer les idées, la description qui va suivre fera référence plus particulièrement à une bande d'acier, cette bande pouvant indifféremment être laminée à chaud ou à froid. Il n'en résulte cependant aucune limitation du procédé de l'invention, qui est généralement applicable à d'autres métaux ou alliages tels que l'aluminium et ses alliages, ainsi qu'à des matériaux non métalliques tels que le papier et les matières plastiques.

## Buts de l'invention

La présente invention vise à fournir un procédé d'acquisition de l'image d'une surface de dimensions données, ayant de préférence au moins 500 µm de largeur de champ de vision, en un temps très court, c'est-à-dire en moins de 100 ns et ainsi de figer le mouvement d'un produit pouvant défiler même à grande vitesse c'est-à-dire à plus de 10 m/s.

Un autre but de la présente invention est de pouvoir relever le profil précis de la surface, ou relevé topographique aléatoire de la surface, en utilisant une projection d'une ou plusieurs lignes micrométriques, par exemple de 5 µm d'épaisseur et de longueur au moins égale à la largeur du champ de vision, de positions connues, de préférence parallèles, les unes par rapport aux autres et séparées par exemple de 10 à 50 µm. Ces lignes sont projetées selon un certain angle, de sorte à être focalisées sur la surface à observer, la technique utilisée étant celle de la triangulation.

Un but encore complémentaire de l'invention est de pouvoir reconstituer, de manière inhérente à la technique décrite, l'aspect général de la surface et de donner une indication de la répartition des plateaux et des creux ou encore de la répartition et de la forme des cratères.

## Principaux éléments caractéristiques de l'invention

Un premier objet de la présente invention se rapporte à un procédé pour l'établissement du relevé topographique micrométrique global et la détermination en ligne de paramètres de rugosité 2D et 3D d'une surface en défilement, de préférence une surface d'acier.

Ce procédé met un oeuvre essentiellement :

-    une source de lumière laser émettant un faisceau passant au travers d'une ou plusieurs fibres optiques et d'un système optique réalisant au moins une ligne micrométrique de longueur au moins égale à la largeur du champ de vision, ladite ligne étant projetée sur ladite surface ;
-    un dispositif de mesure optique, de préférence un microscope industriel possédant un axe optique (Z) ;
-    un capteur de distance ;
-    des moyens comprenant un moteur pour déplacer ledit dispositif de mesure selon son axe optique (Z) en vue d'assurer sa focalisation sur ladite surface et des moyens pour positionner l'axe optique (Z) perpendiculairement au plan contenant ladite surface ;
-    un appareil de prise de vue avec sortie analogique ou digitale, de préférence une caméra matricielle CCD ou C-MOS associée à un objectif de manière à obtenir une résolution spatiale d'au moins 1 µm ;
-    des moyens matériels et logiciels, couplés au dit appareil de prise de vue pour l'acquisition, le traitement, l'analyse et l'archivage d'images, ainsi que pour l'établissement d'un diagnostic quant aux caractéristiques de rugosité de ladite surface.

Selon une première caractéristique essentielle de l'invention, la ligne micrométrique susmentionnée est projetée selon un angle d'incidence compris entre 10 et 80°, et de préférence entre 25 et 65°, par rapport à l'axe optique (Z) précité et on procède à l'acquisition d'une image d'une partie de la surface de dimensions données. On traite ensuite numériquement cette image de manière à isoler une projection de la ligne, la lisser puis en déterminer les lignes de bord et la ligne milieu. Un relevé topographique local de la surface est alors réalisé par une ligne comprise entre et y compris ces lignes de bord, de préférence par la ligne milieu.

Avantageusement, la position des lignes micrométriques projetées les unes par rapport aux autres est connue. Celles-ci sont de préférence parallèles entre elles et de préférence séparées par une distance comprise entre 10 et 50 µm, leur largeur étant de préférence égale à 3 µm ± 2 µm.

Une deuxième caractéristique essentielle de l'invention, bien que non obligatoire, est que l'on utilise en outre la source de lumière laser pour réaliser un éclairage global et en ce que l'on traite l'image obtenue par l'éclairage global pour en isoler des caractéristiques de rugosité tant 2D que 3D, à savoir essentiellement la position de vallées et/ou de cratères, afin de positionner de manière globale le relevé topographique local. On parlera alors de relevé topographique global pour caractériser le résultat obtenu.

La combinaison des deux caractéristiques essentielles précitées permet alors de reconstituer une surface représentative de la surface réelle en utilisant un nombre déterminé d'images et de là, permet de calculer des paramètres de rugosité 3D.

Les paramètres de rugosité 2D ou 3D pouvant être déterminés par la présente invention sont bien connus de l'homme de métier et peuvent être très nombreux, le cadre de la présente description ne pouvant être limitatif à cet égard.

On définira plus précisément un relevé topographique local comme étant le relevé d'un paramètre de rugosité selon une direction déterminée, par exemple X, perpendiculaire à l'axe Z (axe optique du microscope). Il s'agit d'un relevé en coupe (les axes de référence X, Y et Z sont définis selon la manière conventionnelle habituelle).

On définira un relevé topographique global comme étant le relevé d'un paramètre de rugosité selon une surface (XY) perpendiculaire à l'axe Z. Par exemple, un relevé topographique global peut être obtenu en procédant à un balayage selon l'axe Y d'un relevé topographique local selon l'axe X.

Un choix entre au moins deux types d'éclairage global est de préférence réalisé en faisant passer le faisceau incident dans un séparateur de rayons (beamsplitter) à l'intérieur du microscope ou en éclairant la surface par l'extérieur du microscope.

Selon une première modalité d'exécution préférée, l'éclairage global est un éclairage illuminant ladite surface sous incidence oblique, comprise entre 5 et 40°, et de préférence à 20° ± 2° par rapport au plan de la surface.

Selon une deuxième modalité d'exécution préférée, l'éclairage global est un éclairage "brightfield".

Selon l'invention, l'image observée de la ligne projetée sur la surface a l'aspect d'une ligne brisée permettant de déterminer les variations de hauteur ($\Delta Z$) locales par triangulation. On met alors à profit les principes connus de la triangulation, notamment que les variations de hauteur ($\Delta Z$) à partir d'une cote de référence ($Z_0$, $\Delta Z = Z-Z_0$) sont obtenues à partir des variations de position de la ligne brisée ($\Delta X = X-X_0$) selon la formule :

$$\Delta Z = \Delta X \cdot \cotg(\alpha).$$

La mise en oeuvre concrète de l'invention est réalisée par le fait que la ligne brisée mesurée en fonction de la position de pixels est convertie par étalonnage en un profil de hauteur micrométrique.

La présente invention se caractérise avantageusement par le fait que le traitement numérique de l'image comprend en outre le détail des étapes suivantes :

- l'image est d'abord binarisée en utilisant le principe d'entropie maximale ;

- une fermeture, correspondant à une dilatation suivie d'une érosion, est appliquée en utilisant un kernel circulaire de taille de 3 à 5, de préférence 4, pixels de rayon ;

- une érosion est ensuite appliquée, de préférence en utilisant un kernel circulaire de taille inférieure d'une unité à celle du kernel de l'opération de fermeture ;

- la ligne ainsi obtenue est alors précisément localisée, selon bord minimum, bord maximum et milieu.

La présente invention s'appliquera de préférence à une surface appartenant à une bande d'acier en défilement sur une ligne de production à une vitesse comprise entre 1 et 20 m/s, à une surface possédant une rugosité de type essentiellement aléatoire, telle qu'une surface grenaillée ou à une surface possédant une rugosité de type essentiellement déterministe, telle qu'une surface de cylindre de laminage gravé par laser ou texturé par faisceau électronique.

Un autre objet de la présente invention concerne un dispositif pour la mise en oeuvre de ce procédé d'établissement du relevé topographique global et l'évaluation en ligne des paramètres de rugosité 2D et 3D d'une surface en défilement. Ce dispositif comprend un premier ensemble comprenant :

- un microscope industriel, possédant un axe optique (Z) et équipé d'un objectif de grossissement compris entre 5x et 30x, à distance de focalisation de préférence supérieure à 10 mm et à profondeur de champ minimale supérieure à la moitié de la rugosité estimée pic à pic, de préférence à 15 µm et comprenant une lentille d'adaptation caméra de grossissement compris entre 2,5x et 5x ;

- une source de lumière laser, de préférence un laser pulsé dans le visible d'énergie réglable jusqu'à 10 mJ, émettant un faisceau passant au travers d'une ou plusieurs fibres optiques et d'un système optique réalisant au moins une ligne micrométrique de longueur au moins égale à la largeur du champ de vision, ladite ligne se superposant à un éclairage global et étant projetée selon un angle d'incidence ($\alpha$) de 45° ± 20° par rapport à l'axe optique (Z) du microscope, le temps d'illumination étant de préférence réglable entre 0 et 10 ns ;

- un capteur de distance de type triangulation laser, placé à une distance d'au moins 10 mm de la surface observée (S), ledit capteur étant monté obliquement de sorte que la zone visée par ledit capteur corresponde à la zone observée par le microscope ;
- des moyens comprenant un moteur pour déplacer ledit dispositif de mesure selon son axe optique (Z) en vue d'assurer sa focalisation sur ladite surface et des moyens pour positionner l'axe optique (Z) perpendiculairement au plan contenant ladite surface ;
- une caméra matricielle à fonctionnement asynchrone, de préférence CCD ou C-MOS, fournissant un champ de vision d'au moins 500 µm de large et une résolution spatiale d'au moins 0,001 fois le champ de vision ;
- des moyens matériels et logiciels, couplés à ladite caméra matricielle pour l'acquisition, le traitement, l'analyse et l'archivage d'images, ainsi que pour l'établissement d'un diagnostic quant aux caractéristiques de rugosité 2D et/ou 3D de ladite surface.

Avantageusement, le dispositif ci-dessus comprend un deuxième ensemble constitué de deux éléments, tels que des tables de rotation motorisées, permettant de positionner l'axe optique (Z) de manière perpendiculaire au plan contenant la surface observée. Le deuxième ensemble peut être pourvu d'un système antivibratoire permettant d'isoler ledit ensemble de la charpente métallique telle qu'existante en ligne industrielle et soumise à des vibrations éventuelles. Le deuxième ensemble peut en outre être couplé à un dispositif de déplacement permettant de le protéger lors d'un incident de ligne, de préférence un axe linéaire motorisé.

Toujours selon l'invention, lesdits moyens matériels et logiciels comprennent un ordinateur commandant les deux ensembles précités.

Une caractéristique particulièrement avantageuse de l'invention est que le microscope peut comprendre un filtre bloquant pour le rayonnement du capteur de distance et passant pour le rayonnement d'éclairage de la surface et de projection de lignes.

## Brève description des figures

La figure 1 représente le schéma de principe de fonctionnement du dispositif de mesure utilisé pour mettre en oeuvre le procédé de l'invention.

La figure 2.a est une représentation schématique en plan du dispositif de mesure de la figure 1. La figure 2.b. est une représentation schématique en élévation du dispositif de la figure 1.

Les figures 3.a et 3.b représentent des images digitales obtenues avec le dispositif de mesure décrit à la figure 1 en projection de lignes avec éclairage global.

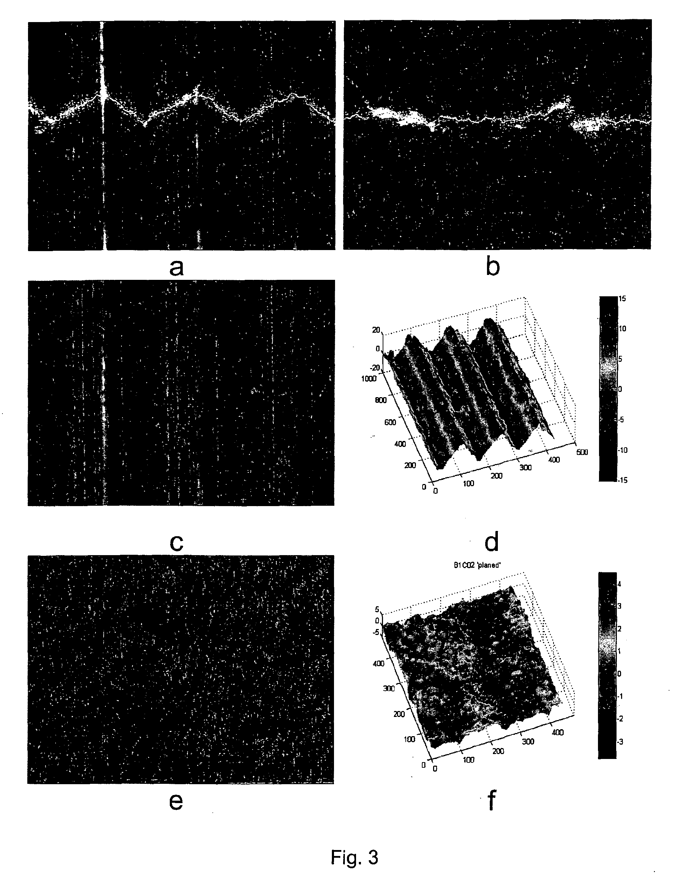

Les figures 3.c et 3.e représentent des images de surface globale.

Les figures 3.d et 3.f représentent les relevés topographiques obtenus à partir d'un balayage de projections de ligne.

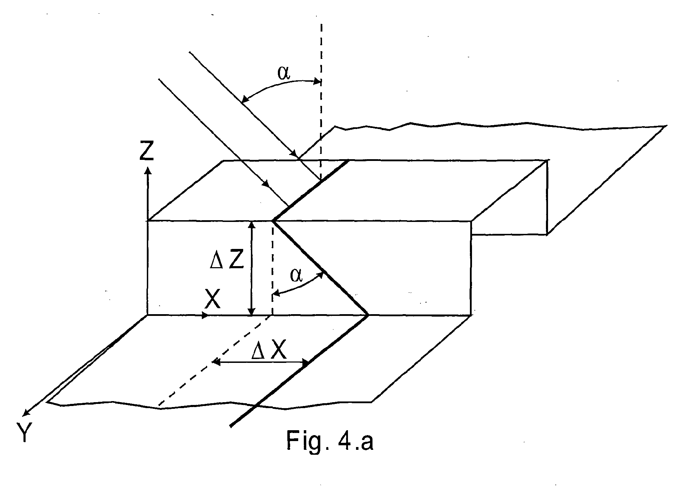

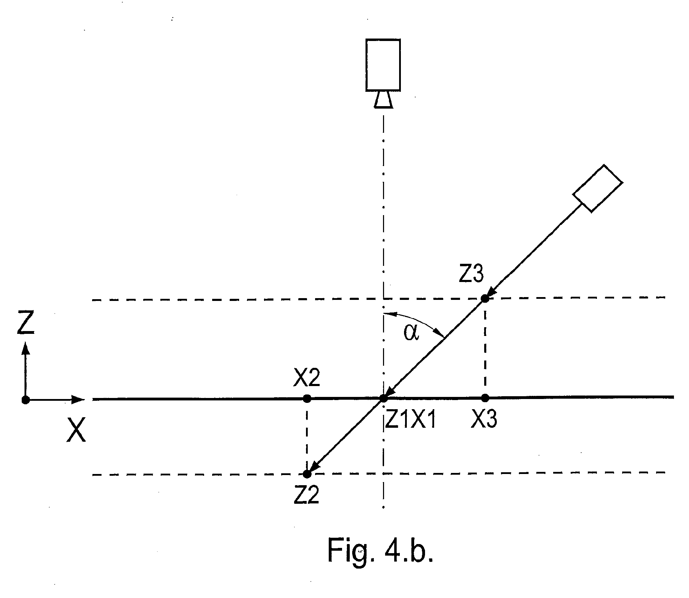

Les figures 4.a et 4.b représentent schématiquement le principe de triangulation utilisé.

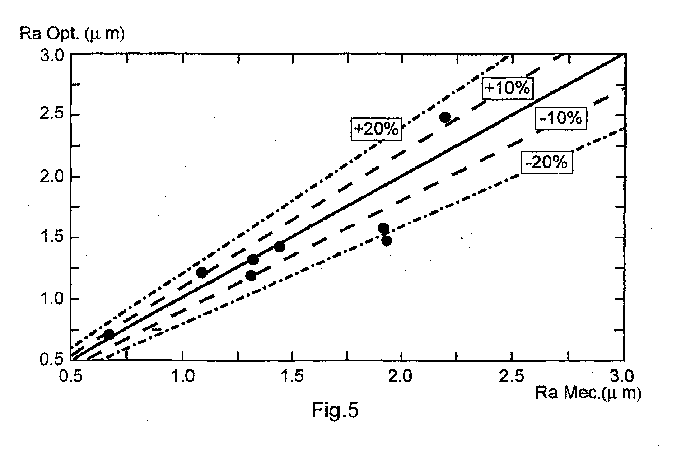

La figure 5 représente la courbe reliant la rugosité arithmétique 2D calculée à la rugosité mesurée mécaniquement pour une série d'échantillons.

## Description d'une forme d'exécution préférée de l'invention

La présente invention se rapporte à un procédé pour le relevé topographique et l'évaluation en ligne des paramètres de rugosité 2D et 3D d'une surface en défilement, de préférence une surface d'acier.

Cette reconstitution de profil topographique utilisera comme appoint l'éclairage oblique préalablement décrit dans la demande N° BE2002/0192 dans le cas par exemple de la rugosité dite aléatoire, ou un éclairage "brightfield" dans le cas par exemple de la rugosité dite déterministe. Ceci permet de relier le profil relevé au moyen de la projection de lignes à une topographie plus globale de la surface observée et donc de reconstituer un relevé représentatif de la topographie de la surface.

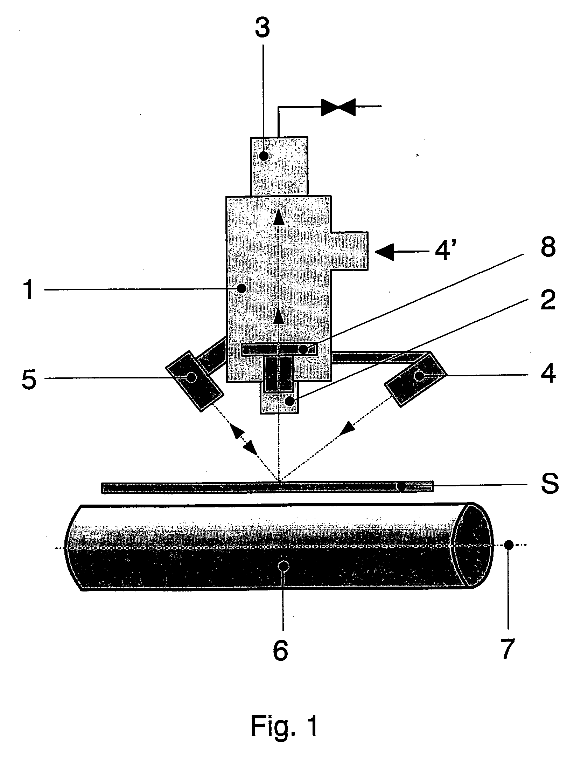

Selon l'invention, on utilise un microscope en ligne développé par la Demanderesse (GaScope®) et décrit à la figure 1 pour faire l'acquisition des images de la surface. Ce microscope peut utiliser soit une illumination oblique 4, par exemple selon une inclinaison comprise entre 5 et 40°, et de préférence à 20°, soit encore une illumination "brightfield" 4'.

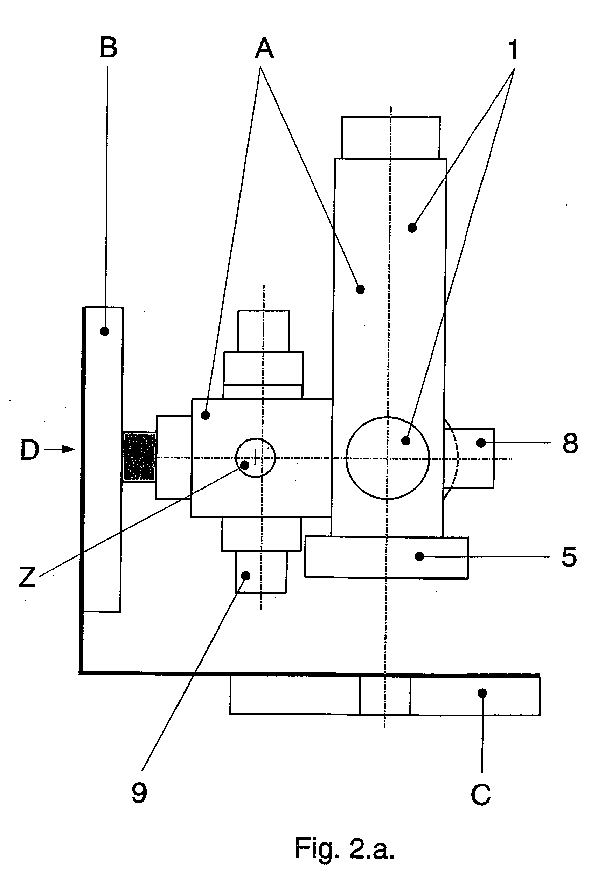

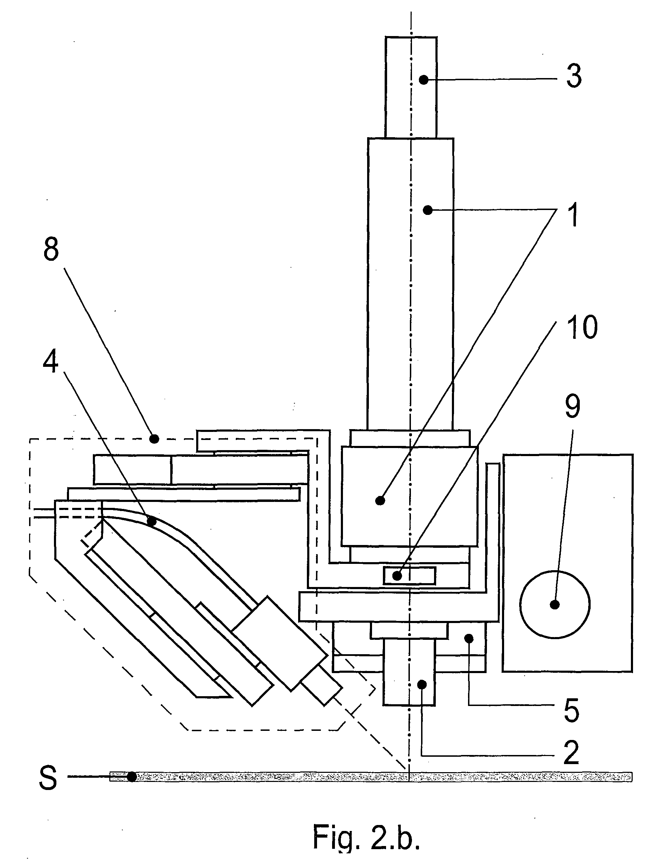

L'appareillage de mesure en ligne A décrit sur les figures 1 et 2 pour la mise en oeuvre du procédé de l'invention comprend au moins un microscope industriel 1 équipé d'un objectif à grande distance de travail 2, de préférence supérieure à 5 mm, une lentille d'adaptation caméra, un appareil de prise de vue avec une sortie analogique ou digitale, comme par exemple une caméra matricielle 3, de préférence CCD ou C-MOS, un éclairage comprenant un laser utilisé pour un éclairage oblique 4 ou "brightfield" 4' tel que déjà mentionné, un dispositif de projection de ligne(s) micrométrique(s) 8, un capteur de distance 5 et un moteur 9 agissant sur le déplacement selon l'axe Z qui est l'axe optique du microscope afin de permettre la focalisation correcte du système.

Le microscope peut avantageusement être équipé d'un filtre 10 qui bloquera le rayonnement du capteur de distance et sera passant pour le rayonnement d'éclairage de la surface et de projection de lignes.

La figure 1 représente le cas d'une bande d'acier en défilement, tel qu'on positionne la bande S en l'appliquant sur le surface d'un cylindre 6 par traction et qu'on positionne le microscope de manière telle que l'axe optique du système croise orthogonalement l'axe 7 du cylindre 6 et est compris dans un segment d'arc situé entre la première et la dernière ligne de contact entre la bande supportant la surface et le cylindre.

L'appareillage A est monté sur un ensemble D comprenant deux éléments B et C, tels que des tables de rotation motorisées, ledit ensemble D permettant de positionner l'axe optique Z de manière perpendiculaire au plan contenant la surface observée S (Figures 1 et 2). De préférence, l'ensemble D est pourvu d'un système antivibratoire permettant d'isoler ledit ensemble de la charpente métallique telle qu'existante en ligne industrielle et soumise aux diverses vibrations souvent présentes dans ce type d'environnement industriel. De plus, l'ensemble peut être placé avantageusement sur un système de mise en place/parcage, par exemple un axe linéaire motorisé, afin de protéger le système lors d'un incident de ligne.

L'appareillage A est associé également à des moyens tels qu'un ordinateur permettant d'assurer au moins les opérations suivantes :

- contrôler les moyens de positionnement de l'axe optique, par exemple le ou les moteurs de réglage de la distance selon l'axe optique Z et de positionnement des tables B et C ;
- contrôler la distance entre l'objectif 2 du microscope et la surface S examinée ;
- contrôler le positionnement de la (ou des lignes) de projection afin qu'elles soi(en)t le mieux positionnée(s) possible dans le champ de vision et qu'elles soient focalisée(s) sur le niveau moyen de la surface ;
- agir sur l'éclairage laser 4,4' précité ;
- décider de la prise d'images et étant pourvu d'au moins une carte d'acquisition d'images (frame grabber) apte à travailler avec des caméras en fonctionnement asynchrone, acquérir, traiter et analyser des images ;
- éventuellement émettre un diagnostic et archiver les résultats.

Ce type d'appareillage a déjà été décrit par la Demanderesse dans les demandes de brevet belges N° 2001/0398 et 2002/0192 (non publiées).

Le procédé de l'invention met en oeuvre une source de lumière laser 4,4' passant au travers d'une ou plusieurs fibres optiques et d'un système optique qui, associés à un ensemble de positionnement précis, par exemple deux tables de translation, constituent le dispositif de projection micrométrique 8. Ce dispositif réalise une ou plusieurs lignes micrométriques ayant par exemple $3 \pm 2$ μm de largeur et dont la longueur est au moins égale à la largeur du champ de vision. Ces lignes sont projetées selon un angle d'incidence de $45 \pm 20°$ par rapport à la surface.

La source de lumière laser peut avantageusement être utilisée en parallèle pour l'éclairage oblique (voir demande de brevet BE2002/0192) dans le cas de la rugosité dite aléatoire ou comme éclairage "brightfield" (voir demande de brevet BE2001/0398) dans le cas de la rugosité déterministe. Cette double utilisation de la même source est réalisée au moyen d'un séparateur (beamsplitter) divisant l'énergie incidente en deux, l'une transmise et l'autre réfléchie.

Selon l'invention, on procède à l'acquisition d'une image d'une partie de la surface de dimensions données et on traite numériquement cette image en vue de réaliser les opérations suivantes :

- d'une part, isoler chaque ligne projetée, la lisser puis en déterminer les bords ainsi que la ligne milieu. Cette dernière est alors utilisée comme relevé topographique de la surface. En effet, selon le principe de la triangulation (figures 4.a et 4.b), la ligne observée est plus ou moins brisée en fonction du niveau de la surface. Un étalonnage du système permet alors de convertir cette ligne brisée, observée en pixels, en μm selon la hauteur. Le relevé ainsi obtenu peut alors être traité pour obtenir tout paramètre normalisé de rugosité 2D désiré. Connaissant dx et Z(x), on a, par exemple :

$$R_a = L^{-1} \int_0^L |Z(x)| dx \quad ,$$

où L est la longueur du tronçon sur lequel on mesure la rugosité ;

- d'autre part, la surface étant en outre soumise à un éclairage global (oblique ou "brightfield"), traiter l'image ainsi obtenue pour en isoler les caractéristiques principales, à savoir essentiellement la position des vallées et/ou des cratères afin de repositionner le relevé topométrique obtenu dans un contexte plus global. Les vallées et cratères peuvent être caractérisés non seulement en surface mais en profondeur si la ou les lignes projetées les traversent ;
- au moyen du couplage des deux opérations décrites ci-dessus, reconstituer une surface représentative de la surface réelle en utilisant n images. De cette manière, les paramètres 3D de la rugosité peuvent alors être calculés. Connaissant la forme de la vallée et/ou du cratère, ainsi que leur position et celle de la ligne projetée, il est possible de préciser si elle traverse le relief en son centre ou sur le bord. Après un certain nombre de relevés, il est donc possible de repositionner chaque profil dans une surface représentative d'une surface typique rencontrée sur le produit. On a ainsi un relevé X,Y, Z de la surface et on peut en calculer les paramètres 3D.

Selon l'invention, le traitement numérique de l'image, pour ce qui concerne la ligne projetée (relevé topographique local), comprend en outre le détail des étapes suivantes :

- l'image est d'abord binarisée en utilisant le principe d'entropie maximale, c'est-à-dire par sélection d'une valeur seuil qui maximise l'entropie de l'image résultante, c'est-à-dire l'information y contenue ;
- une fermeture est appliquée, ce qui correspond à une dilatation (grossissement des objets blancs par ajout d'une couche de pixels le long des bords de l'objet) suivie d'une érosion (amincissement des objets blancs par enlèvement d'une couche de pixels le long des bords de l'objet). L'effet global est de préserver la forme générale des objets (c'est-à-dire de la ligne) tout en en élevant les objets "noirs" plus petits que le "kernel" utilisé. Cela permet d'éliminer les petits objets correspondant par exemple à du bruit et de remplir les petits trous dans un objet blanc plus grand. Le "kernel" utilisé a une forme quasi-circulaire et une taille typique de 3 à 5 pixels de rayon ou demi-largeur ;
- une nouvelle érosion est ensuite appliquée, de préférence en utilisant un kernel circulaire de taille d'une unité inférieure à celle du kernel de l'opération de fermeture ;
- la ligne ainsi obtenue est alors localisée de manière précise dans l'image : bord minimum, bord maximum et milieu.

Un traitement possible de l'éclairage global selon l'invention consisterait, par exemple, à :

- binariser l'image par entropie maximale pour obtenir l'image de la ligne projetée et ce, afin de pouvoir retirer ladite ligne de l'image globale, définie précédemment, puis traiter l'image résultante de manière à obtenir un ensemble d'objets correspondant, par exemple, aux vallées ;
- pour chaque objet obtenu, en calculer la surface et les coordonnées du cercle circonscrit (position du centre, "taille" ou diamètre).

Une combinaison des deux caractéristiques essentielles susmentionnées consisterait alors, par exemple dans le cas d'une rugosité déterministe, à associer à chaque ligne traitée une position dans une image initiale arbitrairement choisie. La largeur du ou des cratères à l'endroit traversé par la ligne, ainsi que la distance entre les centres des creux ainsi déterminés, permettant de réaliser ce positionnement.

La figure 4.a illustre le principe de la mesure de triangulation permettant de déterminer la variation de hauteur $\Delta Z$, sous éclairage oblique d'angle $\alpha$ par rapport à la normale Z à la bande métallique en défilement. Cette normale Z donne la direction d'observation de la caméra 3, c'est-à-dire l'axe optique du système. Connaissant $\alpha$, on détermine par calcul $\Delta Z$ à partir des variations mesurées d'amplitude $\Delta X$ de la ligne brisée projetée observée, selon la formule :

$$\Delta Z = \Delta X \cdot \mathrm{cotg}(\alpha).$$

La figure 4.b. représente les différents niveaux d'impacts possibles X1, X2, X3 d'un point projeté sur une surface se trouvant respectivement à une hauteur Z1, Z2, Z3.

La figure 5 représente un exemple de courbe permettant de relier les résultats obtenus par le calcul ci-dessus pour la rugosité 2D avec les valeurs correspondantes mesurées mécaniquement dans le cas d'une série d'échantillons.

Des résultats expérimentaux sont illustrés dans les différentes figures 3.a à 3.f. Les figures 3.a et 3.b sont des images obtenues par projection de lignes et avec éclairage global ("brightfield"). Les figures 3.c et 3.e sont des images de surface globale. Les figures 3.d et 3.f sont les relevés topographiques 3D correspondants représentés dans une vue en perspective. Ces relevés correspondent respectivement à un cas d'étalon et à un cas de rugosité. Ces relevés topographiques sont obtenus en déplaçant d'un pas connu l'échantillon observé, en analysant chaque image ainsi obtenue et en reconstituant une cartographie XYZ de la surface.

La présente invention présente de plus l'avantage, grâce à la combinaison d'une projection de lignes et d'un éclairage de type "brightfield" ou oblique, de pouvoir reconstituer la topographie à 3 dimensions aussi bien dans le cas de produits à rugosité de type aléatoire, comme les surfaces grenaillées (distribution de maxima aléatoire), que de produits à rugosité de type déterministe, comme les cylindres de laminage gravés par laser ou texturés par faisceau électronique (LASERTEX - *Laser Texturing,* EBT - *Electron Beam Texturing).* Cela est réalisé :

- soit par recombinaison d'un certain nombre de lignes au moyen de l'éclairage global de la surface, qui permet de resituer chaque ligne dans une surface représentative,
- soit par utilisation d'une projection de plusieurs lignes cartographiant directement une zone de la surface observée,
- soit encore par combinaison des 2 opérations précitées.

## Revendications

1. Procédé pour l'établissement du relevé topographique micrométrique global et la détermination en ligne de paramètres de rugosité 2D et 3D d'une surface (S) en défilement, de préférence une surface d'acier, mettant un oeuvre essentiellement :

- une source (4,4') de lumière laser émettant un faisceau passant au travers d'une ou plusieurs fibres optiques et d'un système optique (8) réalisant au moins une ligne micrométrique de longueur au moins égale à la largeur du champ de vision, ladite ligne étant projetée sur ladite surface ;
- un dispositif de mesure optique, de préférence un microscope industriel (1) possédant un axe optique (Z) ;
- un capteur de distance (5) ;
- des moyens comprenant un moteur pour déplacer ledit dispositif de mesure selon son axe optique (Z) en vue d'assurer sa focalisation sur ladite surface (S) et des moyens pour positionner l'axe optique (Z) perpendiculairement au plan contenant ladite surface (S) ;
- un appareil de prise de vue avec sortie analogique ou digitale (3), de préférence une caméra matricielle CCD ou C-MOS associée à un objectif de manière à obtenir une résolution spatiale d'au moins 1 μm ;
- des moyens matériels et logiciels, couplés audit appareil de prise de vue pour l'acquisition, le traitement, l'analyse et l'archivage d'images, ainsi que pour l'établissement d'un diagnostic quant aux caractéristiques de rugosité de ladite surface, **caractérisé en ce que**, la ligne micrométrique susmentionnée étant projetée selon un angle d'incidence (α) compris entre 10 et 80°, et de préférence entre 25 et 65°, par rapport à l'axe optique (Z) précité, on procède à l'acquisition d'une image d'une partie de la surface (S) de dimensions données et on traite numériquement cette image de manière à isoler une projection de la ligne, la lisser puis en déterminer les lignes de bord et la ligne milieu, un relevé topographique local de la surface étant réalisé par une ligne comprise entre et y compris ces lignes de bord, de préférence par la ligne milieu.

**2.** Procédé selon la revendication 1, **caractérisé en ce que** la position des lignes micrométriques projetées, les unes par rapport aux autres, est connue, celles-ci étant de préférence parallèles entre elles et de préférence séparées par une distance comprise entre 10 et 50 μm, leur largeur étant de préférence égale à 3 μm ± 2 μm.

**3.** Procédé selon la revendication 1 ou 2, **caractérisé en ce que** l'on utilise en outre la source de lumière laser (4,4') pour réaliser un éclairage global et **en ce que** l'on traite l'image obtenue par l'éclairage global pour en isoler des caractéristiques de rugosité tant en 2D que 3D, à savoir essentiellement la position de vallées et/ou de cratères, afin de positionner de manière globale ledit relevé topographique local.

**4.** Procédé selon la revendication 3, **caractérisé en ce qu'**un choix entre au moins deux types d'éclairage global est réalisé en faisant passer le faisceau incident dans un séparateur de rayons (beamsplitter) à l'intérieur du microscope ou en éclairant la surface par l'extérieur du microscope.

**5.** Procédé selon la revendication 3 ou 4, **caractérisé en ce que** l'éclairage global est un éclairage illuminant ladite surface (S) sous incidence oblique, comprise entre 5 et 40°, et de préférence à 20° ± 2° par rapport au plan de la surface.

**6.** Procédé selon la revendication 3 ou 4, **caractérisé en ce que** l'éclairage global est un éclairage "brightfield".

**7.** Procédé selon l'une quelconque des revendications précédentes, **caractérisé en ce que** l'image observée de la ligne projetée sur la surface (S) a l'aspect d'une ligne brisée permettant de déterminer les variations de hauteur (ΔZ) locales par triangulation.

**8.** Procédé selon la revendication 7, **caractérisé en ce que** les variations de hauteur (ΔZ) à partir d'une cote de référence ($Z_0$, $\Delta Z = Z - Z_0$) sont obtenues à partir des variations de position de la ligne brisée ($\Delta X = X - X_0$) selon la formule :

$$\Delta Z = \Delta X \cdot \text{cotg}(\alpha).$$

**9.** Procédé selon la revendication 7 ou 8, **caractérisé en ce que** la ligne brisée mesurée en fonction de la position de pixels est convertie par étalonnage en un profil de hauteur micrométrique.

**10.** Procédé selon l'une quelconque des revendications précédentes, caractérisé en ce le traitement numérique de l'image comprend en outre le détail des étapes suivantes :

- l'image est d'abord binarisée en utilisant le principe d'entropie maximale ;
- une fermeture, correspondant à une dilatation suivie d'une érosion, est appliquée en utilisant un kernel circulaire de taille de 3 à 5, de préférence 4, pixels de rayon ;
- une érosion est ensuite appliquée, de préférence en utilisant un kernel circulaire de taille inférieure d'une unité à celle du kernel de l'opération de fermeture ;
- la ligne ainsi obtenue est alors précisément localisée, selon bord minimum, bord maximum et milieu.

**11.** Procédé selon l'une quelconque des revendications 1 à 10, **caractérisé en ce que** la surface (S) appartient à une bande d'acier en défilement sur une ligne de production à une vitesse comprise entre 1 et 20 m/s.

**12.** Procédé selon l'une quelconque des revendications 1 à 10, **caractérisé en ce que** la surface (S) possède une rugosité de type essentiellement aléatoire, telle qu'une surface grenaillée.

**13.** Procédé selon l'une quelconque des revendications 1 à 10, **caractérisé en ce que** la surface (S) possède une rugosité de type essentiellement déterministe, telle qu'une surface de cylindre de laminage gravé par laser ou texturé par faisceau électronique.

**14.** Dispositif pour la mise en oeuvre du procédé d'établissement du relevé topographique global et l'évaluation en ligne des paramètres de rugosité 2D et 3D d'une surface (S) en défilement, selon l'une quelconque des revendications précédentes, **caractérisé en ce qu'**il comprend un premier ensemble (A) comprenant :

- un microscope industriel (1), possédant un axe optique (Z) et équipé d'un objectif de grossissement compris entre 5x et 30x, à distance de focalisation de préférence supérieure à 10 mm et à profondeur de champ minimale supérieure à la moitié de la rugosité estimée pic à pic, de préférence à 15 µm et comprenant une lentille d'adaptation caméra de grossissement compris entre 2,5x et 5x ;
- une source (4,4') de lumière laser, de préférence un laser pulsé dans le visible d'énergie réglable jusqu'à 10 mJ, émettant un faisceau passant au travers d'une ou plusieurs fibres optiques et d'un système optique (8) réalisant au moins une ligne micrométrique de longueur au moins égale à la largeur du champ de vision, ladite ligne se superposant à un éclairage global et étant projetée selon un angle d'incidence (α) de 45° ± 20° par rapport à l'axe optique (Z) du microscope, le temps d'illumination étant de préférence réglable entre 0 et 10 ns ;
- un capteur de distance (5) de type triangulation laser, placé à une distance d'au moins 10 mm de la surface observée (S), ledit capteur étant monté obliquement de sorte que la zone visée par ledit capteur corresponde à la zone observée par le microscope (1) ;
- des moyens comprenant un moteur pour déplacer ledit dispositif de mesure selon son axe optique (Z) en vue d'assurer sa focalisation sur ladite surface (S) et des moyens pour positionner l'axe optique (Z) perpendiculairement au plan contenant ladite surface (S) ;
- une caméra matricielle à fonctionnement asynchrone, de préférence CCD ou C-MOS, fournissant un champ de vision d'au moins 500 µm de large et une résolution spatiale d'au moins 0,001 fois le champ de vision ;
- des moyens matériels et logiciels, couplés à ladite caméra matricielle pour l'acquisition, le traitement, l'analyse et l'archivage d'images, ainsi que pour l'établissement d'un diagnostic quant aux caractéristiques de rugosité 2D et/ou 3D de ladite surface.

**15.** Dispositif selon la revendication 14, **caractérisé en ce qu'**il comprend un deuxième ensemble (D) constitué de deux éléments (B,C), tels que des tables de rotation motorisées, permettant de positionner l'axe optique (Z) de manière perpendiculaire au plan contenant la surface observée (S).

**16.** Dispositif selon la revendication 14 ou 15, **caractérisé en ce que** le deuxième ensemble (D) est pourvu d'un système antivibratoire permettant d'isoler ledit ensemble de la charpente métallique telle qu'existante en ligne industrielle et soumise à des vibrations éventuelles.

**17.** Dispositif selon la revendication 16, **caractérisé en ce que** le deuxième ensemble (D) est en outre couplé à un dispositif de déplacement permettant de le protéger lors d'un incident de ligne, de préférence un axe linéaire motorisé.

**18.** Dispositif selon l'une quelconque des revendications 15 à 17, **caractérisé en ce que** lesdits moyens matériels et logiciels comprennent un ordinateur commandant les ensembles précités (A,D).

**19.** Dispositif selon la revendication 14, **caractérisé en ce que** le microscope (1) comprend un filtre (10) bloquant pour le rayonnement du capteur de distance (5) et passant pour le rayonnement d'éclairage de la surface et de projection de lignes.

Fig. 1

Fig. 2.a.

Fig. 2.b.

a

b

c

d

e

f

Fig. 3

Fig. 4.a

Fig. 4.b.

Fig.5